# EUROPEAN PATENT APPLICATION

(11) **EP 4 197 327 A1**
(43) Date of publication of application: **21.06.2023**
(21) Application number: 21214710.2
(22) Date of filing: 15.12.2021
(51) Int. Cl.: A01N 25/04, A01N 25/30, A01N 43/10, A01N 41/06, A01N 41/10, A01N 47/38

(54) **STABLE SUSPOEMULSIONS**

(71) Applicant: Adama Agan Ltd., 7710001 Ashdod (IL)
(72) Inventor: HEVRONI, Liron, 8502500 Meitar (IL); SERTCHOOK, Hanan, 7042703 Gedera (IL); SILBERT, Gilad, 7917500 Kibutz Dorot (IL)
(74) Representative: Modiano, Gabriella Diana

(57) **Abstract**

The present application is directed to a suspoemulsion composition comprising (i) a continuous liquid aqueous phase; (ii) a liquid organic phase emulsified in the continuous aqueous phase, the liquid organic phase comprising a water-insoluble organic solvent and a First Active Ingredient that is solubilized in the organic phase; (iii) a Second Active Ingredient that is solid and is suspended in the continuous aqueous phase, and is at least partially soluble in the organic phase; (iv) a polymeric surfactant in a concentration of more than 0.5 w/w%, with respect to the total weight of the suspoemulsion; and (v) between 0.1 and 15 w/w%, with respect to the total weight of the suspoemulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant.

## Description

### FIELD OF THE INVENTION

The present invention belongs to the field of agrochemistry. It is directed to a stable suspoemulsion for agricultural applications, to a process for its preparation and to methods for controlling weeds, diseases and pests in plants.

### BACKGROUND

Suspoemulsions can be manufactured by first preparing separately a concentrated oil in water emulsion (EW) phase and a suspension concentrate (SC) phase, and then combining them, or by preparation of a suspension concentrate (SC) and a non-aqueous emulsifiable concentrate (EC), and introduction of the emulsifiable concentrate into the suspension concentrate.

Creating stable emulsions that additionally contain at least one solid active ingredient, the socalled suspo-emulsions or suspoemulsions, presents significant challenges to the formulation chemist. These challenges increase the greater the number and complexity of the components, and the formulation chemist must avoid many potential problems. These include coalescence of the emulsion droplets during the different stages of manufacturing, storage and application.

This can occur if the emulsifier is not strongly adsorbed at the O/W interface, and results in its partial or complete relocation to the water/solid interface, and/or its displacement by the dispersant of the solid particles used to prepare the suspension, which is not a good emulsion stabilizer. This in turn results in a coalescence of the emulsion droplets with ultimate separation of the oil phase.

It is also necessary to avoid aggregation of the solid particles during mixing and storage (homoflocculation). This can occur if the dispersant of the solid particles used to prepare the suspension is not strongly adsorbed and relocates to the water/oil interface and/or becomes displaced by the emulsifier, which is more strongly adsorbed but it is not a good stabilizer for the solid particles.

Both droplet coalescence and solid particles aggregation can occur if the dispersants of the solid particles are not compatible with the emulsifiers system and can cause bridging interaction or replacement at the interface.

A third challenge is preventing crystal growth of the solid particles. This process takes place mainly due to Ostwald ripening, which occurs when the suspension particles have a limited solubility in the oil phase, for example, solvents or other liquid active ingredients present in the suspoemulsion. Small suspension particles which are more soluble than their larger counterparts may dissolve in the oil phase and then recrystallize onto the larger suspension particles, resulting in the formation of large crystals. Ostwald ripening can also affect the emulsion droplets, causing enlargement of the larger emulsion drops as the smaller droplets dissolve in the aqueous continuous phase.

A final challenge is preventing heteroflocculation, a process by which the solid particles and the emulsion droplets co-aggregate. This occurs when solid particles in suspension are partially wetted by the oil and may reside at the oil/water interface (this is particularly the case if the oil droplets are much larger than the suspension particles).

The challenge for the formulation chemist is to choose the right dispersants and emulsifiers, in the right proportions, to produce a stable system. Typically, this is achieved by coating the solid particles with a polymer dispersant forming a steric layer around each particle. However, choosing the right dispersant in the right proportions can be challenging, especially if the objective is to find a particular combination of surfactants/emulsifiers applicable to a wide range of active ingredient combinations.

This task becomes even more challenging where an active ingredient suspended is partially soluble in the organic phase, whether it is in the organic solvent, a lipophilic active ingredient or in both. Typically, an organic phase is chosen in which the solid particles are insoluble in order to prevent Ostwald ripening and other recrystallization effects. If the solid particles of one active ingredient already present partial solubility in the organic phase, it becomes more difficult to prevent Ostwald ripening. Such partial solubilization can be with respect to the organic solvent or the other active ingredient, if liquid.

Thus, attempts at providing stable suspoemulsion formulations have typically involved the use of polymer dispersants to keep the droplets and particles physically apart. However, these attempts have not found general applicability, because although they can be applied to specific systems, they are not applicable to a wide range of combinations. It is therefore the objective of the invention to provide a suspoemulsion formulation that is stable over a wide range of combination of active ingredients.

### SUMMARY OF THE INVENTION

The inventors have developed a suspoemulsion (SE) formulation that is stable under different combinations of active ingredients.

Thus, a first aspect is a suspoemulsion composition comprising
(i) a continuous liquid aqueous phase;
(ii) a liquid organic phase emulsified in the continuous aqueous phase, the liquid organic phase comprising
   - a water-insoluble organic solvent in a concentration between 1 w/w% and 50 w/w%, with respect to the total weight of the suspoemulsion; and
   - a First Active Ingredient that is solubilized in the organic phase;
(iii) a Second Active Ingredient that is solid and is suspended in the continuous aqueous phase, and is at least partially soluble in the liquid organic phase;
(iv) a polymeric surfactant in a concentration of at least 0.5 w/w%, with respect to the total weight of the suspoemulsion; and
(v) between 0.1 and 15 w/w%, with respect to the total weight of the suspoemulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant.

The suspoemulsions of the invention are surprisingly stable. Further, this increased stability can be observed in formulations containing different Active Ingredients. The invention initially has been developed using a combination of dimethenamid-P and mesotrione. Additionally, the stability results were reproduced in a suspoemulsion comprising thiencarbazone, cyprosulfamide and dimethenamid-P, in which the use of a polymeric surfactant, especially in high concentration, and a polyanionic block copolymer surfactant was critical, the best results being obtained when combining both features. The use of a water-insoluble organic solvent, preferably a vegetable or mineral oil having 8 to 24 carbon atoms, preferably 12 to 22 carbon atoms, further improved the physical stability.

A further aspect of the invention is directed to the process for preparing the suspoemulsion of the invention. The process comprises mixing an oil-in-water emulsion with an aqueous suspension in a proportion comprised between 10:1 to 1:10. Thus, a further aspect of the invention is a process for the preparation of the suspoemulsion that comprises mixing an oil-in-water emulsion with an aqueous suspension in a proportion comprised between 10:1 to 1:10, wherein
the oil-in-water emulsion comprises a continuous aqueous phase and a liquid organic phase emulsified in the continuous aqueous phase, the liquid organic phase comprising
   - a water-insoluble organic solvent in a concentration between 1 w/w% and 60 w/w%, with respect to the total weight of the emulsion; and
   - a First Active Ingredient that is solubilized in the organic phase;
      and wherein
the aqueous suspension comprises a Second Active Ingredient which is partially soluble in the liquid organic phase and is solid and is suspended in a continuous aqueous phase; and a polymeric surfactant in a concentration of at least 3 w/w%, with respect to the total weight of the aqueous suspension;
   and wherein
the oil-in-water emulsion, the aqueous suspension or both comprise a total of between 0.1 and 15 w/w%, with respect to the total weight of the suspoemulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant.

Therefore, the polyanionic block copolymer surfactant can be added to either the oil-in-water emulsion only, to the aqueous suspension only or to both of them so that the final concetration in the suspoemulsion is between 0.1 and 15 w/w%. The suspoemulsions obtainable following the above process have displayed an excellent stability and are also an aspect of the present invention.

The inventors started the development of the suspoemulsions of the invention using commercially available oil-in-water emulsions and aqueous suspensions, which provided disappointing results. The suspoemulsions of the invention therefore required the development of specifically tailored oil-in-water emulsions and aqueous suspensions. Thus, further aspects of the invention are oil-in-water emulsions and aqueous suspensions as described herein that are the starting material for the preparation of the suspoemulsions of the invention and which comprise the polyanionic block copolymer surfactant, as well as their use for the preparation of the supoemulsions of the invention.

Specifically, a further aspect of the invention is an oil-in-water emulsion comprising a liquid organic phase emulsified in a continuous aqueous phase, the liquid organic phase comprising
- a water-insoluble organic solvent, preferably a vegetable or mineral oil having 8 to 24 carbon atoms, preferably 12 to 22 carbon atoms, in a concentration between 1 w/w% and 60 w/w%, with respect to the total weight of the oil-in-water emulsion;
- a First Active Ingredient that is solubilized in the organic phase; and
- between 0.1 and 15 w/w%, with respect to the total weight of the oil-in-water emulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant.

A further aspect is the use of said oil-in-water emulsion for preparing the suspoemulsion of the invention.

Specifically, a further aspect is an aqueous suspension comprising a Second Active Ingredient which is, at least partially soluble in a first organic phase, and it is solid and is suspended in a continuous aqueous phase; a polymeric surfactant in a concentration of at least 3 w/w%, with respect to the total weight of the aqueous suspension; and between 0.1 and 15 w/w%, with respect to the total weight of the aqueous suspension, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant.

A further aspect is the use of said aqueous suspension for preparing the suspoemulsion of the invention.

The suspoemulsions of the invention can be loaded with different types of agrochemical products. It is therefore a further aspect of the invention the use of the suspoemulsion of the invention for the control of undesired plants, pests or diseases. It is also a further aspect a method for the control of undesired plants, pests or diseases comprising contacting an effective amount of the suspoemulsion of the invention with the locus of said undesired plants, pests or diseases.

### DETAILED DESCRIPTION OF THE INVENTION

### Definitions

Prior to setting forth the present subject matter in detail, it may be helpful to provide definitions of certain terms to be used herein. Unless defined otherwise, all technical and scientific terms used herein have the same meaning as is commonly understood by one skilled in the art to which this subject matter pertains.

As used herein, the term "stable" when used in connection with physical stabilization or when used in connection with a composition means that no significant crystallization and/or thickening was observed after at least 2 weeks of storage at a temperature of at least 54°C. Namely, that the dispersion stability according to CIPAC MT 180 did not significantly change after at least 2 weeks of storage at a temperature of at least 54°C.

As used herein, the term "effective amount" when used in connection with an active ingredient refers to an amount of the active ingredient that, when ingested, contacted with or sensed, is sufficient to achieve a good level of control or of activity on a pest, disease and/or unwanted plant.

An "Active Ingredient" is a substance capable of controlling unwanted plants, plant pests or plant diseases, and does not cause significant damage to the treated crop plants.

As used herein the term "plant" or "crop" or "crop plants" includes reference to whole plants, plant organs (e.g. leaves, stems, twigs, roots, trunks, limbs, shoots, fruits etc.), plant cells, or plant seeds, which have industrial interest, including grasslands and pastures, such as for example plants destined to human consumption, animal consumption or other industrial uses. This term also encompasses crops such as fruits. The term "plant" may also include the propagation material thereof, which may include all the generative parts of the plant such as seeds and vegetative plant material such as cuttings and tubers, which can be used for the multiplication of the plant. It may also include spores, corms, bulbs, rhizomes, sprouts basal shoots, stolons, and buds and other parts of plants, including seedlings and young plants, which are to be transplanted after germination or after emergence from soil. As used herein, the term "crop" includes plants which have been modified by breeding, mutagenesis or genetic engineering. Genetically modified plants are plants in which their genetic material has been modified by the use of recombinant DNA techniques. Typically, one or more genes have been integrated into the genetic material of such a plant in order to improve certain properties of the plant.

As used herein, the term "locus" includes a habitat, breeding ground, plant, propagation material, soil, area, material or environment in which an undesired plant, pest or disease is growing or may grow.

As used herein, the terms "control" or "controlling" or "combatting" refer to preventing disease, pests or the growth of unwanted plants, protecting plants from diseases or pests, delaying the onset of disease, or to reducing the deleterious effects of the disease, or pests, or to killing or to reducing growth of unwanted plants, pests or microorganisms.

The term "lipophilic" or "hydrophobic" refers to having affinity to organic solvents, and which therefore do not dissolve in water or do so in negligible amounts.

The term "hydrophilic" or "lipophobic" refers to species having affinity to water, and which therefore do not dissolve in organic solvents or do so in negligible amounts. For example, lipophilic active ingredients have a solubility of less than 1 g/L in water at 20°C.

As used herein, the phrase "block copolymer" means a polymer comprising at least two different polymers combined by a covalent bond. Each of the blocks is usually a homopolymer but can also be a copolymer with a specific distinct physical/chemical or functional characteristic (e.g., having one block that is easily soluble in water, with the other block being primarily insoluble in water). Therefore, the polyanionic block copolymer surfactant comprises a "hydrophilic moiety" and a "lipophilic moiety". Each of these moieties can be homopolymers or block copolymers themselves.

The suspoemulsions of the invention may additionally comprise agriculturally acceptable inert additives. These are defined herein as any substance that itself is not an active ingredient but is added to the composition to improve its physical and/or chemical properties (for example, stability, bioavailability of the active ingredient(s), viscosity, pH, etc.).

The suspoemulsions of the invention can be mixed with tank adjuvants prior to their application in the field to improve physical properties and efficacy. Some substances can be used as agriculturally acceptable inert additives in the suspoemulsion of the invention or mixed as tank additives with the suspoemulsion of the invention immediately prior to application in the field. The tank mixes resulting from mixing the suspoemulsions of the invention with one or more tank adjuvants are also an aspect of the present invention.

Non-limiting examples of agriculturally acceptable inert additives and of tank adjuvants are surfactants, wetting agents (or spreaders), stickers, emulsifiers, dispersants, suspending agents, plant penetrants (or translocators), antifreeze agents, preservative agents, binders, fertilizers, thickening agents, anti-oxidation agents, drift retardants, buffers, inverting agents, soil penetrants, UV absorbers, protectant binders, anti-foaming agents or humeactants.

The term "a" or "an" as used herein includes the singular and the plural, unless specifically stated otherwise. Therefore, the terms "a," "an" or "at least one" can be used interchangeably in this application.

For purposes of better understanding the present teachings and in no way limiting the scope of the teachings, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that may vary depending upon the desired properties sought to be obtained. At the very least, each numerical parameter should at least be construed in light of the number of reported significant digits and by applying ordinary rounding techniques. In this regard, used of the term "about" herein specifically includes ±10% from the indicated values in the range. In addition, the endpoints of all ranges directed to the same component or property herein are inclusive of the endpoints, are independently combinable, and include all intermediate points and ranges.

Unless otherwise indicated, the weight percentages ("w/w%") are expressed with respect to the total amount of the components. For example, if reference is made to a 5 w/w% of a particular component of the formulation of the invention, it must be understood as 5 w/w% with respect to the total weight of the formulation of the invention.

### Suspoemulsions

For the purposes of the present invention it is understood that a suspoemulsion is a formulation comprising an aqueous continuous phase which contains emulsified oily droplets and solids in suspension. The oil droplets comprise an agrochemical (solid or liquid, preferably liquid at room temperature) active ingredient (First Active Ingredient) that is essentially solubilized in a water-insoluble organic solvent. A solid active ingredient is suspended in the aqueous phase due to its low solubility in water (Second Active Ingredient), and it is solid at room temperature.

Suspoemulsions are typically prepared by combining an emulsion comprising the First Active Ingredient and an aqueous suspension comprising the Second Active Ingredient. The combination of a stable emulsion with a stable aqueous suspension does not guarantee the production of a stable suspoemulsion, which presents its own particular difficulties. That was the case when developing the present invention. The starting point was the use of different combinations of commercial and stable emulsions and aqueous suspension. None of said combinations provided a suspoemulsion with the required stability.

Thus, the inventors have developed emulsions and aqueous suspensions with components specifically designed to provide stable suspoemulsions once mixed together. The combination of two components was found to be key in providing the desired stability: a polymeric surfactant in high concentration and the polyanionic block copolymer surfactant. The use of each one individually provided improvement, and the combination of both resulted in a synergistic effect that provided a highly stable suspoemulsion formulation without any appreciable precipitation or aggregate formation after 2 weeks at 54°C. The use of a vegetable or mineral oil, for example a vegetable oil that is a saturated or unsaturated fatty acid having 8 to 24 carbon atoms, preferably 12 to 22 carbon atoms, further improved stability.

Any polymeric surfactant in a concentration of more than 0.5 w/w% is suitable for the present invention. The best results are achieved with a polymeric surfactant that comprises a backbone of (meth)acrylate grafted with polyalkyloxide chains, preferably a polymeric surfactant that comprises a backbone of alkyl(meth)acrylate grafted with polyalkyloxide chains, for example one that comprises a backbone of methyl(meth)acrylate grafted with chains of polyalkyloxide, wherein the alkyl is selected from the group consisting of ethyl, propyl and a mixture of both. Such polymeric surfactants are commercially available, for example through Croda as Altlox^{®} 4913 or from Huntsman (Tersperse^{®} 2500). The polymeric surfactant must be in a concentration of more than 0.5 w/w%, more preferably at least 1.0 w/w%, with respect to the total weight of the suspoemulsion, for example, between more than 0.5 w/w% and 5 w/w%, preferably between more than 0.5 w/w% and 3 w/w%, or between more than 0.5 w/w% and 2 w/w%, or between 0.8 and 1.5 w/w%, with respect to the total weight of the suspoemulsion.

The concentration of the polyanionic block copolymer surfactant in the suspoemulsion can be about 0.1 w/w%, 0.5 w/w%, 1.0 w/w%, 1.5 w/w%, 2.0 w/w%, 3.0 w/w%, 4.0 w/w%, 5.0 w/w% or 6.0 w/w%. Typically, the concentration of the polyanionic block copolymer surfactant in the suspoemulsion is between 0.5 and 12 w/w%, preferably between 1 and 11 w/w%, preferably between 1.5 and 10 w/w%, preferably between 1.5 and 9 w/w%, preferably between 2 and 6 w/w%, preferably between 2.2 and 8 w/w%, preferably between 2.2 and 7 w/w%, with respect to the total weight of the final suspoemulsion.

It is preferred that in the polyanionic block copolymer surfactant at least 90 w/w% of the hydrophobic moiety comprises hydrophobic monomers. In some cases, a small number of hydrophilic monomers (i.e., less than 10 percent by monomer number) may be introduced to the hydrophobic moiety. For example, the hydrophobic monomers are selected from the group consisting of acrylate esters or derivatives thereof, methacrylate esters or derivatives thereof, styrene or derivatives thereof, and any combination thereof. An alkyl acrylate monomer, such as a methyl, ethyl, or butyl acrylate, is one exemplary embodiment in this regard. For example, the hydrophobic monomer is selected from a group consisting of methylacrylate, ethylacrylate, n-propylacrylate, n- butylacrylate, 2-ethyl-hexyl acrylate, methylmethacrylate, ethylmethacrylate, n-propylmethacrylate, n-butylmethacrylate, 2-ethyl-hexyl methacrylate and mixtures thereof, for example, the hydrophobic monomer is ethyl acrylate.

The hydrophilic moiety of the anionic surfactant can be a hydrophilic block copolymer. Said hydrophilic moiety comprises at least 60 w/w% of charged monomers, for example, at least 70 w/w% or at least 80 w/w% or at least 90 w/w%. In one embodiment, 100 w/w% of the hydrophilic moiety is made of charged monomers. Exemplary amounts of charged monomer are 68 w/w%, 77 w/w%, 83 w/w%, or 88 w/w% with respect to the hydrophilic moiety. The polyanionic block copolymer surfactant comprises at least 35 w/w% of charged monomers, with respect to the total weight of the polyanionic block copolymer surfactant, preferably at least 45 w/w%, or 55 w/w%, for example 58 w/w% with respect the total weight of the anionic surfactant.

The charged monomers of the anionic surfactant can be zwitterionic monomers, for example anionic monomers. Thus, it is preferred that at least 60 % of the monomers in the hydrophilic moiety are anionic monomers, typically a sulfonate group, for example, 2-acrylamido-2-methylpropane sulphonate (AMPS). Therefore, less than 40 w/w% of the monomers in the hydrophilic moiety are neutral hydrophilic monomers, for example one selected from a group consisting of N-vinylpyrrolidone, ethylene oxide, glycoside acrylate, acrylamide and mixtures thereof.

Typically, the weight percentage of the hydrophilic moiety is at least 50 w/w%, preferably 65-90 w/w%, for example, 70-85 w/w%, with respect to the total weight of the polyanionic block copolymer surfactant.

In relation to its total weight, the polyanionic block copolymer surfactant typically comprises up to 150 monomers, or up to 85 monomers, for example 63 monomers. Thus, the weight of the polyanionic block copolymer surfactant can be up to 100,000 g/mol, typically up to about 31,000 g/mol, for example, about 17,000 g/mol, about 12,000 g/mol. Alternatively, the weight of the polyanionic block copolymer surfactant can be 8,000 to 50,000 g/mol, for example 10,000 to 25,000 g/mol.

The hydrophilic moiety can weight 5,000 to 100,000 g/mol, typically 6,000 to 50,000 g/mol. It, is preferred that the weight of the hydrophilic moiety is 7,000 to 30,000 g/mol, for example 8,000 to 12,000 g/mol.

The hydrophobic moiety can weight 500 to 5,000 g/mol, typically 1,000 to 4,000 g/mol. For example, the hydrophobic moiety comprises alkyl acrylate monomers, preferably ethyl acrylate monomers, and the weight of the hydrophobic moiety is 1,000 to 4,000 g/mol, for example 1,500 to 3,500 g/mol, preferably 1,500 to 3,000 g/mol.

Thus, it is preferred that the molar ratio of the hydrophobic moiety to the hydrophilic moiety is 1:2-4. For example, the weight ratio between the hydrophobic moiety and the hydrophilic moiety ([hydrophobic moiety]:[hydrophilic moiety]) is typically lower than 0.6, lower than or equal to 0.5, lower than or equal to 0.4, lower than or equal to 0.3, or lower than or equal to 0.2. Typically, the weight ratio between the hydrophobic moiety and the hydrophilic moiety ([hydrophobic moiety]:[hydrophilic moiety]) is between 0.01 and 0.6, for example, between 0.1 and 0.3.

A typical composition of the polyanionic block copolymer surfactant used in the suspoemulsion disclosed herein comprises:
(A) an hydrophobic moiety obtained by polymerization of at least one hydrophobic monomer selected from the group consisting of methylacrylate, ethylacrylate, n-propylacrylate, n-butylacrylate, 2-ethyl-hexyl acrylate, methylmethacrylate, ethylmethacrylate, n-propylmethacylate, n-butylmethacrylate and 2-ethyl-hexyl methacrylate, especially from methylacrylate, ethylacrylate, and butyl acrylate; said hydrophobic moiety comprising at least 90 w/w% percent of its units derived from said hydrophobic monomers, and said hydrophobic moiety having a molecular weight ranging from 1,000 to 4,000 g/mol, for example from 1,500 to 3,500 g/mol, for example from 1,500 to 3,000 g/mol; and
(B) a hydrophilic moiety obtained by polymerization of at least one anionic monomer, in particular one anionic monomer having a sulphonate group, preferably 2-acrylamido-2-methylpropane sulphonate; said hydrophilic moiety comprising at least 60 w/w%, with respect to the total weight of the hydrophilic moiety, of units derived from said anionic monomer, and said hydrophilic moiety having a molecular weight ranging from 6,000 to 50,000 g/mol, for example from 7,000 to 30,000 g/mol; with the weight ratio between the hydrophobic moiety and the hydrophilic moiety ranging between 0.1 and 0.3, and with said copolymer having an overall molecular weight preferably ranging from 8,000 to 50,000 g/mol, for instance from 10,000 to 25,000 g/mol.

The polyanionic block copolymer surfactants are optionally neutralized with a basic compound. The basic compounds may be any known in the art that are capable of neutralizing the anionic surfactants. Basic compounds include, for example, inorganic bases, C₈₋₁₈ alkyl amine polyalkoxylates, alkanol amines, alkanol amides, and mixtures thereof.

Exemplary inorganic bases include ammonium hydroxides, sodium hydroxides, potassium hydroxides, calcium hydroxides, magnesium hydroxides, zinc hydroxides, and mixtures thereof. The C₈₋₁₈ alkyl amine polyalkoxylates may be, for example, C₈₋₁₈ alkyl amine polypropoxylates and/or C₈₋₁₈ alkyl amine polyethoxylates. Exemplary C₈₋₁₈ alkyl amine polyalkoxylates include tallow amine polyalkoxylates, cocoamine polyalkoxylates, oleylamine polyalkoxylates, and stearylamine polyalkoxylates. The C₈₋₁₈ alkyl amine polyethoxyates may have from about 2 to about 50 moles of ethylene oxide per molecule, more preferably from about 2 to about 20 moles of ethylene oxide per molecule. Exemplary C₈₋₁₈ alkyl amine polyethoxylates include tallow amine ethoxylates (2 moles EO or 8 moles EO), cocoamine ethoxylates, oleylamine ethoxylates, and stearylamine ethoxylates. Exemplary alkanol amines include diethanol amine and triethanol amine. Exemplary alkanol amides include oleic diethanolamide and linoleic diethanolamide, and the diethanolamides of other C₈₋₁₈ fatty acids.

The organic solvent can be selected from the group consisting of lactic acid alkyl esters, aromatic naphtha solvents, aromatic of aliphatic ketones, alkyl amides, and pyrrolidones (such as n-octyl pyrrolidone). Although any organic solvent with low solubility in water can be used, it is preferable that it is a vegetable oil or a mineral oil, preferably a vegetable oil, for example a vegetable oil that is a saturated or unsaturated fatty acid having 8 to 24 carbon atoms, preferably 12 to 22 carbon atoms.

Many vegetable oils are available in the market, and the skilled person can choose for example from those having 8 to 24 carbon atoms, preferably 12 to 22 carbon atoms, for example a vegetable oil that is an unepoxidized or epoxidized vegetable oil selected from the group consisting of rapeseed oil, almond oil, jojoba oil, apricot kernel oil, avocado oil, babassu oil, borage oil, brazil nut oil, carrot root extract, ceresin oil, dog rose hips oil, emu oil, evening primrose oil, grape seed oil, hemp seed oil, kukui nut oil, macadamia nut oil, mango seed oil, olive oil, pine oil, peanut oil NF, rice bran oil, safflower oil, sesame oil, soybean oil, sunflower seed oil, sweet almond oil, wheat germ oil and mixtures and esters thereof.

The concentration of the water-insoluble organic solvent is between 1 w/w% and 50 w/w%, with respect to the total weight of the suspoemulsion, for example, between 1 w/w% and 40 w/w%, preferably between 1 w/w% and 20 w/w%, or between 1 w/w% and 15 w/w%, more preferably between 3 w/w% and 12 w/w%, or 5 w/w% to 10 w/w%, with respect to the total weight of the suspoemulsion.

The combination of the water-insoluble organic solvent, preferably a vegetable or mineral oil having 8 to 24 carbon atoms, preferably 12 to 22 carbon atoms, with a high concentration of polymeric surfactant and the polyanionic block copolymer surfactant has proven to provide stable suspoemulsions of different combinations of agrochemical active ingredients. Thus, the First Active Ingredient can be an insecticide, a fungicide or a herbicide.

Exemplary insecticides having low solubility in water that can be solubilized in the organic solvent are selected from the group consisting of benzofuranyl methylcarbamate insecticides such as benfuracarb, and carbosulfan; oxime carbamate insecticides such as aldicarb; fumigant insecticides such as chloropicrin, 1,3-dichloropropene and methyl bromide; juvenile hormone mimics such as fenoxycarb; organophosphate insecticides such as dichlorvos; aliphatic organothiophosphate insecticides such as malathion and terbufos; aliphatic amide organothiophosphate insecticides such as dimethoate; benzotriazine organothiophosphate insecticides such as azinphos-ethyl and azinphos-methyl; pyridine organothiophosphate insecticides such as chlorpyrifos and chlorpyrifos-methyl; pyrimidine organothiophosphate insecticides such as Diazinon; phenyl organothiophosphate insecticides such as parathion and parathion-methyl; pyrethroid ester insecticides such as bifenthrin, cyfluthrin, beta-cyfluthrin, cyhalothrin, gamma-cyhalothrin, lambda-cyhalothrin, zeta-cypermethrin, alpha-cypermethrin, beta-cypermethrin, fenvalerate, and permethrin, and mixtures thereof.

Exemplary fungicides having low solubility in water that can be solubilized in the organic solvent are selected from the group consisting of Aldimorph, Dinocap, Edifenphos, Etridiazole, Fenpropimorph, Iprobenfos, Meptyldinocap, Metalaxyl-M, Propiconazole, tributyltin oxide, and mixtures thereof.

If the First Active Ingredient is an herbicide, it can be one having low solubility in water, typically less than a 1% in weight, that can be solubilized in the organic solvent selected from the group consisting of amide herbicides such as dimethenamid and dimethenamid-P; anilide herbicides such as propanil; benzoic acid herbicides such as dicamba; chloroacetanilide herbicides such as acetochlor, alachlor, butachlor, metolachlor and S-metolachlor; cyclohexene oxime herbicides such as sethoxydim; dinitroaniline herbicides such as benfluralin, ethalfluralin, pendimethalin, and trifluralin; Isoxazolidinone herbicides such as bixlozone; nitrile herbicides such as bromoxynil octanoate; oxyacetamides such as isoxaflutol; phenoxyacetic herbicides such as 4-CPA, 2,4-D, 3,4-DA, MCPA, and MCPA-thioethyl; phenoxybutyric herbicides such as 4-CPB, 2,4-DB, 3,4-DB, and MCPB; phenoxypropionic herbicides such as cloprop, 4-CPP, dichlorprop, dichlorprop-P, 3,4-DP, fenoprop, mecoprop and mecoprop-P; aryloxyphenoxypropionic herbicides such as cyhalofop, fluazifop, fluazifop-P, haloxyfop, haloxyfop-R; pyridine herbicides such as aminopyralid, clopyralid, picloram, and triclopyr; and triazole herbicides such as carfentrazone ethyl, and mixtures thereof.

Preferably, the First Active Ingredient is an herbicide selected from the group consisting of atrazine, bromoxynil, desmedipham, diflufenican, dimethenamid-P, diuron, fomesafen, ioxynil, isoproturon, isoxaben, linuron, S-metolachlor, oryzalin, oxyfluorfen, phenmedipham, prometryn, propyzamide, penoxsulam, pyroxsulam, quinclorac, simazine, terbuthylazine, terbutryn, tralkoxydim, flumioxazin, flumetsulam, metosulam, diclosulam, cloransulam-methyl, and mixtures thereof. More preferably, the First Active Ingredient is an herbicide selected from the group consisting dimethenamid-P, S-metolachlor, and mixtures thereof.

The Second Active Ingredient can be an insecticide, a fungicide or an herbicide that is solid at room temperature and is suspended in the continuous aqueous phase and is partially soluble in the organic phase. The Second Active Ingredient can be a fungicide selected from the group consisting of azoxystrobin, benomyl, captan, carbendazim, chlorothalonil, dimethomorph, difenoconazole, dimethomorph, dinocap, diphenylamine, dodemorph, dodine, edifenphos, epoxiconazole, fenarimol, fenbuconazole, fenpropimorph, fluoxastrobin, iprovalicarb, kresoximmethyl, myclobutanil, oleic acid, orysastrobin, propiconazole, quinoxyfen, tebuconazole, thifluzamide, thiophanate-methyl, thiram, tricyclazole, zoxamide, and mixtures thereof.

The Second Active Ingredient can be an herbicide selected from the group consisting of mesotrione, thiencarbazone, Bixlozone, Isoxaflutol, Bicyclopyrone, atrazine, dicamba, saflufenacil, terbuthylazine, topramezone, imazethapyr, metazachlor, pendimethalin, and mixtures thereof. Morepreferably, the Second Active Ingredient can be an herbicide selected from the group consisting of mesotrione, thiencarbazone, and mixtures thereof.

The suspoemulsion of the invention may also comprise a safener.

For example, the suspoemulsion may comprise
at least one First Active Ingredient selected from dimethenamid-P, S-metolachlor, and mixtures thereof; and
at least one Second Active Ingredient selected from mesotrione, thiencarbazone and mixtures and salts and esters thereof.

The suspoemulsion of the invention can be stable at relatively high loads of active ingredients. Thus, for example, the suspoemulsion may comprise between 1 w/w% and 70 w/w% of a First Active Ingredient and/or between 1 w/w% and 70 w/w% of a Second Active Ingredient. Exemplary non-limitative examples of concentrations of active ingredients are suspoemulsions comprising at least 10 w/w% of a First Active Ingredient, preferably at least 15 w/w% of a First Active Ingredient, or between 20 w/w% and 70 w/w% of a First Active Ingredient, with respect to the total weight of the suspoemulsion. Exemplary non-limitative examples of concentrations of active ingredients are suspoemulsions comprising at least 0.5 w/w% of a Second Active Ingredient, preferably at least 1.0 w/w% of a Second Active Ingredient, or between 1.5 w/w% and 15 w/w% of a Second Active Ingredient, for example between 3.0 w/w% and 13.0 w/w%, for example between 3.0 w/w% and 10.0 w/w% of a Second Active Ingredient, with respect to the total weight of the suspoemulsion.

The First Active Ingredient can comprise one or more active ingredients solubilized in the organic phase, that is, the First Active Ingredients form a homogeneous phase together with the organic solvent. The Second Active Ingredient can comprise one or more active ingredients suspended in the continuous aqueous phase. The combination of high loads of polymeric surfactant, a water-insoluble organic solvent and the polyanionic block copolymer surfactant allow the formulation of a Second Active Ingredient, even when it is partially soluble in the organic phase, that is, even when it is soluble in the water-insoluble organic solvent, in the First Active Ingredient or in both. Such a situation in prior art formulations would cause the Second Active Ingredient to dissolve in the organic phase and then re-precipitate again on the surface of its own solid particles, creating in this way larger crystals and destabilizing the formulation (Ostwald ripening). This effect takes place even if the solubility of the Second Active Ingredient in the organic phase is low. The formulations of the present invention proved to solve this problem and provide stable suspoemulsions.

A situation where the second Active Ingredient is soluble in the organic solvent, in the First Active Ingredient or in both, meaning there is affinity between the Second Active Ingredient and the emulsion droplets, could also cause heteroflocculation, a process by which the solid particles and the emulsion droplets co-aggregate. This occurs when solid particles in suspension are partially wetted by the oil and may reside at the oil/water interface. The suspoemulsions of the present invention prevent this problem.

For example, in the suspoemulsions of the invention the Second Active Ingredient can be at least 0.1 w/w% soluble, for example, at least 0.5 w/w% soluble, for example between 0.1 w/w% and 5 w/w% soluble or between 0.2 w/w% and 4 w/w% soluble or between 0.4 w/w% and 3 w/w% soluble in the liquid organic phase, preferably in the First Active Ingredient. Miscibility measurements were made by mixing 20 grams of the First Active Ingredient and 5 g of the Second Active Ingredient in a vial. The mixture was stirred at 500 rpm at 25°C for 24 hours with a magnetic stirrer, and then filtered in a syringe filter (0.45 um). The concentration of the Second Active Ingredient in the liquid was measured by HPLC.

Suspoemulsions are typically prepared by mixing an aqueous suspension concentrate (SC) of the Second Active Ingredient (solid in aqueous suspension) with an emulsion, or a precursor thereof, of the First Active Ingredient, for example, an oil-in-water emulsion (EW), or an emulsifiable concentrate (EC). In the case of the present invention, the presence of a water-insoluble organic solvent, preferably an oil having 8 to 24 carbon atoms, preferably 12 to 22 carbon atoms, combined with a high concentration of the polymeric surfactant in the aqueous suspension and the polyanionic block copolymer surfactant, has provided a surprisingly stable suspoemulsion (SE). Thus, the process to prepare the suspoemulsion of the invention comprises mixing an oil-in-water emulsion with an aqueous suspension in a proportion comprised between 10:1 to 1:10, wherein
the oil-in-water emulsion comprises a First Active Ingredient and a water-insoluble organic solvent in a concentration between 1 w/w% and 60 w/w%, with respect to the total weight of the oil-in-water emulsion; and
the aqueous suspension comprises a Second Active Ingredient which is suspended in a continuous aqueous phase, at least partially soluble in a liquid organic phase; and a polymeric surfactant in a concentration of at least 3 w/w%, with respect to the total weight of the aqueous suspension;
and wherein
the oil-in-water emulsion, the aqueous suspension or both comprise a total of between 0.1 and 15 w/w%, with respect to the total weight of the suspoemulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant.

In this way an aqueous continuous phase is created wherein the First Active Ingredient and the organic solvent are emulsified, and the Second Active Ingredient is suspended. Preferably, the emulsion is an EW, and the aqueous suspension is an SC formulation.

The suspoemulsions obtainable through the above process is surprisingly stable and are therefore an aspect of the invention.

It is thereof another aspect of the invention the use for preparing a suspoemulsion of said oil-in-water emulsion. An additional aspect of the invention is said oil-in-water emulsion.

Preferably, the oil-in-water emulsion additionally comprises
between 1 w/w% and 5 w/w% of an additional anionic surfactant; and
between 1 w/w% and 5 w/w% of a non-ionic surfactant, preferably an ethoxylated vegetable oil, an alcohol ethoxylate/propoxylate, or a mixture thereof.

Suitable surface-active customarily employed in formulation technology, which are described, inter alia, in "Mc Cutcheon's Detergents and Emulsifiers Annual" MC Publishing Corp., Ridgewood N.J., 1981, Stache, H., "Tensid-Taschenbuch", Carl Hanser Verlag, MunichNienna, 1981 and M. and J. Ash, "Encyclopedia of Surfactants", Vol I-III, Chemical Publishing Co., New York, 1980-81, are suitable for preparation of the herbicidal compositions according to the invention.

The oil-in-water emulsion may comprise an additional anionic surfactant, which has an HLB above 11. Many anionic surfactants are available to the skilled person. Additional anionic surfactants suitable for use in the invention may be any known in the art. The additional anionic surfactants may be polyarylphenol polyalkoxyether sulfates and/or phosphates; C₈₋₁₈ alcohol polyalkoxyether phosphates, carboxylates, and/or citrates; alkyl benzenesulfonic acids; C₈₋₂₀ alkyl carboxylates including fatty acids; C₈₋₂₀ alcohol sulfates; C₈₋₂₀ alcohol phosphate mono- and diesters; C₈₋₂₀ alcohol and (C₈₋₂₀ alkyl)phenol polyoxyethylene ether carboxylates, sulfates and sulfonates; C₈₋₂₀ alcohol and (C₈₋₂₀ alkyl)phenol polyoxyethylene phosphate mono- and diesters; C₈₋₂₀ alkylbenzene sulfonates, naphthalene sulfonates and formaldehyde condensates thereof; lignosulfonates; C₈₋₂₀ alkyl sulfosuccinates and sulfosuccinamates; C₈₋₂₀ acyl glutamates, sarcosinates, isethionates and taurates; water-soluble soaps and mixtures thereof.

Exemplary polyarylphenol polyalkoxyether sulfates and phosphates include polyarylphenol polyethoxyether sulfates and phosphates, polyarylphenol polypropoxyether sulfates and phosphates, polyarylphenol poly(ethoxy/propoxy)ether sulfates and phosphates, and salts thereof. The term "aryl" includes, for example, phenyl, tolyl, naphthyl, tetrahydronaphthyl, indanyl, indenyl, styryl, pyridyl, quinolinyl, and mixtures thereof. Exemplary polyarylphenol polyethoxyether sulfates and phosphates include distyrylphenol polyethoxyether sulfates and phosphates, and tristyrylphenol polyethoxyether sulfates and phosphates. The polyarylphenol polyalkoxether sulfates and phosphates may have a degree of alkoxylation (e.g., ethoxylation) of between about 1 and about 50, preferably between about 2 and about 40, more preferably between about 5 and about 30. Commercially available polyarylphenol polyalkoxyether sulfates and phosphates include, for example, SOPROPHOR^{®} 4 D 384 (Rhodia Corporation, Cranbury, NJ) (tristyrylphenol (EO)₁₆ sulfate ammonium salt), SOPROPHOR^{®} 3 D 33 (Rhodia Corporation, Cranbury, NJ) (tristyrylphenol (EO)₁₆ phosphate free acid), SOPROPHOR^{®} FLK (Rhodia Corporation, Cranbury, NJ) (tristyrylphenol (EO)₁₆ phosphate potassium salt) and SOPROPHOR^{®} RAM/384 (Rhodia Corporation, Cranbury, NJ) (tristyrylphenol polyethoxylated ether sulfate neutralized with polyethoxylated oleylamine). In other embodiments, the polyarylphenol polyalkoxyether sulfates and phosphates may be mono-arylphenol polyalkoxyether sulfates and phosphates, such as styrylphenol polyethoxyether sulfates and phosphates.

Exemplary C₈₋₁₈ alcohol polyethoxyether phosphates, carboxylates and citrates include STEPFAC^{®} 8180 (Stepan Corporation, Northfield, IL) (tridecylalcohol (EO)₃ phosphate), STEPFAC^{®} 8181 (Stepan Corporation, Northfield, IL) (tridecylalcohol (EO)₆ phosphate), STEPFAC^{®} 8182 (Stepan Corporation, Northfield, IL) (tridecylalcohol (EO)₁₂ phosphate), EMCOL^{®} CN-6 (CK Witco Corporation, Greenwich, CT) (tridecylalcohol (EO)₆ carboxylate). The C₈₋₁₈ alcohol polyethoxyether phosphates, carboxylates and citrates may have a degree of ethoxylation of between about 1 and about 25, preferably between about 1 and about 20.

Exemplary alkylbenzene sulfonic acids and salts thereof include dodecylbenzene sulfonic acid, and metal (for example sodium or calcium), ammonia or amine salts of the alkylbenzene sulfonic acids, including dodecylbenzene sulfonic acid. Amine neutralized versions include primary amines, diamines, triamines and alkanol amines.

Further preferred anionic surfactants include (C₈₋₁₂ alkyl)phenol polyoxyethylene ether sulfates, and (C₈₋₁₂ alkyl)phenol polyoxyethylene phosphate mono- and diesters, accompanied in each case by monovalent counterions. In one embodiment the monovalent counterion for a (C₈₋₁₂ alkyl)phenol polyoxyethylene ether sulfate or a (C₈₋₁₂ alkyl)phenol polyoxyethylene phosphate is a protonated polyoxyethylene C₁₂₋₂₀ alkylamine surfactant. More specifically, polyoxyethylene tallowamine salt of a nonylphenol polyoxyethylene ether sulfate, nonylphenol polyoxyethylene phosphate, and a blend of such nonylphenol polyoxyethylene phosphate with polyoxyethylene tallowamine.

The additional anionic surfactants are also optionally neutralized with a basic compound. The basic compounds may be any known in the art that are capable of neutralizing the anionic surfactants. Basic compounds include, for example, inorganic bases, C₈₋₁₈ alkyl amine polyalkoxylates, alkanol amines, alkanol amides, and mixtures thereof.

Exemplary inorganic bases include ammonium hydroxides, sodium hydroxides, potassium hydroxides, calcium hydroxides, magnesium hydroxides, zinc hydroxides, and mixtures thereof. The C₈₋₁₈ alkyl amine polyalkoxylates may be, for example, C₈₋₁₈ alkyl amine polypropoxylates and/or C₈₋₁₈ alkyl amine polyethoxylates. Exemplary C₈₋₁₈ alkyl amine polyalkoxylates include tallow amine polyalkoxylates, cocoamine polyalkoxylates, oleylamine polyalkoxylates, and stearylamine polyalkoxylates. The C₈₋₁₈ alkyl amine polyethoxyates may have from about 2 to about 50 moles of ethylene oxide per molecule, more preferably from about 2 to about 20 moles of ethylene oxide per molecule. Exemplary C₈₋₁₈ alkyl amine polyethoxylates include tallow amine ethoxylates (2 moles EO or 8 moles EO), cocoamine ethoxylates, oleylamine ethoxylates, and stearylamine ethoxylates. Exemplary alkanol amines include diethanol amine and triethanol amine. Exemplary alkanol amides include oleic diethanolamide and linoleic diethanolamide, and the diethanolamides of other C₈₋₁₈ fatty acids.

Exemplary nonionic surfactants include ethylene oxide-propylene oxide block copolymers; ethylene oxide-butylene oxide block copolymers; C₂₋₆ alkyl adducts of ethylene oxide-propylene oxide block copolymers; C₂₋₆ alkyl adducts of ethylene oxide-butylene oxide block copolymers; polypropylene glycols; polyethylene glycols; polyarylphenol polyethoxy ethers; polyalkylphenol polyethoxy ethers; polyglycol ether derivatives of aliphatic or cycloaliphatic alcohols or of saturated or unsaturated fatty acids and alkylphenols, said derivatives containing 3 to 30 glycol ether groups and 8 to 20 carbon atoms in the (aliphatic) hydrocarbon moiety and 6 to 18 carbon atoms in the alkyl moiety of the alkylphenols; mono-, di- and tri(C₁₂₋₂₀ alkyl)esters of polyoxyethylene sorbitan; alkoxylated vegetable oils; alkoxylated acetylenic diols; alkyl polyglycosides and mixtures thereof.

The ethylene oxide-propylene oxide block copolymers may comprise alkyl or alkyphenol ether bases, such as butyl ether, methyl ether, propyl ether, ethyl ether, or mixtures thereof. Commercially available nonionic surfactants include, for example, TOXIMUL^{®} 8320 (Stepan Corporation, Northfield, IL) (butyl ether derivative of EO/PO block copolymer), WITCONOL^{®} NS-500LQ (CK Witco Corporation, Greenwich, CT) (butyl ether derivative of EO/PO block copolymer) and WITCONOL^{®} NS-108LQ (CK Witco Corporation, Greenwich, CT) (nonylphenol ether derivative of EO/PO block copolymer).

It is an additional aspect of the invention the use for preparing a suspoemulsion of said aqueous suspension comprising a Second Active Ingredient which is suspended in a continuous aqueous phase; a polymeric surfactant in a concentration of at least 3 w/w%, with respect to the total weight of the aqueous suspension, and the polyanionic block copolymer surfactant. An additional aspect of the invention is said aqueous suspension. In the case of this aqueous suspension a high concentration of the polymeric surfactant is critical, preferably at least more than 4 w/w%, or more than 5 w/w%, for example, between more than 5 w/w% and 9 w/w%, with respect to the total weight of the aqueous suspension. Higher stability is achieved when the aqueous suspension comprises between 0.1 w/w% and 5 w/w% of a non-ionic surfactant, with respect to the total weight of the aqueous suspension. Said non-ionic surfactant can be, for example, a tristyrylphenol ethoxylate.

It is preferable that the weight proportion between the polymeric surfactant and the non-ionic surfactant is comprised between 2:1 and 10:1, preferably between 3:1 and 6:1 and/or the sum of the polymeric surfactant and the non-ionic surfactant is comprised between 4 w/w% and 15 w/w%, preferably between 4 w/w% and 10 w/w% or 5 w/w% and 9 w/w% or 5.5 w/w% and 8 w/w%, with respect to the total weight of the aqueous suspension.

It is also preferable that the proportion of polymeric surfactant to the Second Active Ingredient in the aqueous suspension is 1:1 to 1:10, preferably 1:2 to 1:10 or 1:4 to 1:10.

An exemplary suspoemulsion according to the invention comprises
(i) a continuous liquid aqueous phase;
(ii) a liquid organic phase emulsified in the continuous aqueous phase, the liquid organic phase comprising
   - a water-insoluble organic solvent in a concentration between 1 w/w% and 50 w/w%, with respect to the total weight of the suspoemulsion; and
   - between 10 w/w% and 60 w/w%, with respect to the total weight of the suspoemulsion, of a First Active Ingredient that is solubilized in the organic phase;
(iii) between 1 w/w% and 10 w/w%, with respect to the total weight of the suspoemulsion, of a Second Active Ingredient that is solid and is suspended in the continuous aqueous phase, and is at least partially soluble in the organic phase;
(iv) a polymeric surfactant in a concentration of between more than 0.5 w/w% and 5 w/w%, with respect to the total weight of the suspoemulsion; and
(v) between 0.1 and 15 w/w%, with respect to the total weight of the suspoemulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant.

An exemplary suspoemulsion according to the invention comprises
(i) a continuous liquid aqueous phase;
(ii) a liquid organic phase emulsified in the continuous aqueous phase, the liquid organic phase comprising
   - a water-insoluble organic solvent in a concentration between 1 w/w% and 50 w/w%, with respect to the total weight of the suspoemulsion, wherein said organic solvent is selected from the group of unepoxidized or epoxidized vegetable oils; and
   - between 10 w/w% and 60 w/w%, with respect to the total weight of the suspoemulsion, of a First Active Ingredient that is solubilized in the organic phase;
(iii) between 1 w/w% and 10 w/w%, with respect to the total weight of the suspoemulsion, of a Second Active Ingredient that is solid and is suspended in the continuous aqueous phase, and is at least partially soluble in the organic phase;
(iv) a polymeric surfactant in a concentration of between more than 0.5 w/w% and 5 w/w%, with respect to the total weight of the suspoemulsion; and
(v) between 0.1 and 10 w/w%, with respect to the total weight of the suspoemulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant.

An exemplary suspoemulsion according to the invention comprises
(i) a continuous liquid aqueous phase;
(ii) a liquid organic phase emulsified in the continuous aqueous phase, the liquid organic phase comprising
   - a water-insoluble organic solvent in a concentration between 1 w/w% and 20 w/w%, with respect to the total weight of the suspoemulsion, wherein said organic solvent is selected from the group of unepoxidized and epoxidized vegetable or mineral oils having 8 to 24 carbon atoms, preferably 12 to 22 carbon atoms; and
   - between 10 w/w% and 60 w/w%, with respect to the total weight of the suspoemulsion, of a First Active Ingredient that is solubilized in the organic phase;
(iii) between 1 w/w% and 10 w/w%, with respect to the total weight of the suspoemulsion, of a Second Active Ingredient that is solid and is suspended in the continuous aqueous phase, and is at least 0.1 w/w% soluble, for example, between 0.2 w/w% and 4 w/w% soluble in the organic phase;
(iv) a polymeric surfactant in a concentration of between more than 0.5 w/w% and 5 w/w%, with respect to the total weight of the suspoemulsion; and
(v) between 0.1 and 8 w/w%, with respect to the total weight of the suspoemulsion, of a polyanionic block copolymer surfactant comprising a hydrophobic moiety and a hydrophilic moiety, wherein at least 60 w/w% of the hydrophilic moiety comprises charged monomers comprising a sulphonate group and wherein the weight percentage of the charged monomers is at least 35 w/w% with respect to the total weight of the polyanionic block copolymer surfactant.

An exemplary suspoemulsion according to the invention comprises
(i) a continuous liquid aqueous phase;
(ii) a liquid organic phase emulsified in the continuous aqueous phase, the liquid organic phase comprising
   - a water-insoluble organic solvent in a concentration between 1 w/w% and 20 w/w%, with respect to the total weight of the suspoemulsion, wherein said organic solvent is selected from the group of unepoxidized and epoxidized vegetable or mineral oils having 8 to 24 carbon atoms, preferably 12 to 22 carbon atoms; and
   - between 10 w/w% and 60 w/w%, with respect to the total weight of the suspoemulsion, of a First Active Ingredient that is solubilized in the organic phase, said First Active Ingredient being selected from the group of atrazine, bromoxynil, desmedipham, diflufenican, dimethenamid-P, diuron, fomesafen, ioxynil, isoproturon, isoxaben, linuron, S-metolachlor, oryzalin, oxyfluorfen, phenmedipham, prometryn, propyzamide, penoxsulam, pyroxsulam, quinclorac, simazine, terbuthylazine, terbutryn, tralkoxydim, flumioxazin, flumetsulam, metosulam, diclosulam, cloransulam-methyl and mixtures thereof;
(iii) between 1 w/w% and 10 w/w%, with respect to the total weight of the suspoemulsion, of a Second Active Ingredient that is solid and is suspended in the continuous aqueous phase, and is at least 0.1 w/w% soluble, for example, between 0.2 w/w% and 4 w/w% soluble in the liquid organic phase, for example, in the First Active Ingredient;
(iv) a polymeric surfactant in a concentration of between more than 0.5 w/w% and 5 w/w%, with respect to the total weight of the suspoemulsion; and
(v) between 0.1 and 8 w/w%, with respect to the total weight of the suspoemulsion, of a polyanionic block copolymer surfactant comprising a hydrophobic moiety and a hydrophilic moiety, wherein at least 60 w/w% of the hydrophilic moiety comprises charged monomers comprising a sulphonate group and wherein the weight percentage of the charged monomers is at least 35 w/w% with respect to the total weight of the polyanionic block copolymer surfactant, and wherein the hydrophobic moiety is obtained by polymerization of at least one hydrophobic monomer selected from the group consisting of methylacrylate, ethylacrylate, n-propylacrylate, n-butylacrylate, 2-ethyl-hexyl acrylate, methylmethacrylate, ethylmethacrylate, n-propylmethacylate, n-butylmethacrylate and 2-ethyl-hexyl methacrylate, especially from methylacrylate, ethylacrylate, and butyl acrylate; said hydrophobic moiety comprising at least 90 wt percent of its units derived from said hydrophobic monomers.

An exemplary suspoemulsion according to the invention comprises
(i) a continuous liquid aqueous phase;
(ii) a liquid organic phase emulsified in the continuous aqueous phase, the liquid organic phase comprising
   - a water-insoluble organic solvent in a concentration between 1 w/w% and 20 w/w%, with respect to the total weight of the suspoemulsion, wherein said organic solvent is selected from the group of unepoxidized and epoxidized vegetable or mineral oils having 8 to 24 carbon atoms, preferably 12 to 22 carbon atoms; and
   - between 10 w/w% and 60 w/w%, with respect to the total weight of the suspoemulsion, of a First Active Ingredient that is solubilized in the organic phase;
(iii) between 1 w/w% and 10 w/w%, with respect to the total weight of the suspoemulsion, of a Second Active Ingredient that is solid and is suspended in the continuous aqueous phase, and is at least 0.1 w/w% soluble, for example, between 0.2 w/w% and 4 w/w% soluble in the liquid organic phase, for example, in the First Active Ingredient, and wherein said Second Active Ingredient is selected from the group consisting of mesotrione, thiencarbazone and mixtures thereof;
(iv) a polymeric surfactant in a concentration of between more than 0.5 w/w% and 5 w/w%, with respect to the total weight of the suspoemulsion; and
(v) between 0.1 and 15 w/w%, with respect to the total weight of the suspoemulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant, and wherein the molar ratio of the hydrophobic moiety to the hydrophilic moiety is comprised between 1:2 and 1:4.

An exemplary suspoemulsion according to the invention comprises
(i) a continuous liquid aqueous phase;
(ii) a liquid organic phase emulsified in the continuous aqueous phase, the liquid organic phase comprising
   - a water-insoluble organic solvent in a concentration between 1 w/w% and 20 w/w%, with respect to the total weight of the suspoemulsion, wherein said organic solvent is selected from the group of unepoxidized and epoxidized vegetable or mineral oils having 8 to 24 carbon atoms, preferably 12 to 22 carbon atoms; and
   - between 10 w/w% and 60 w/w%, with respect to the total weight of the suspoemulsion, of a First Active Ingredient that is solubilized in the organic phase;
(iii) between 1 w/w% and 10 w/w%, with respect to the total weight of the suspoemulsion, of a Second Active Ingredient that is solid and is suspended in the continuous aqueous phase, and is at least 0.1 w/w% soluble in the liquid organic phase, for example, between 0.2 w/w% and 4 w/w% soluble in the liquid organic phase, for example, in the First Active Ingredient;
(iv) a polymeric surfactant in a concentration of between more than 0.5 w/w% and 5 w/w%, with respect to the total weight of the suspoemulsion, wherein the polymeric surfactant comprises a backbone of (meth)acrylate grafted with polyalkyloxide chains; and
(v) between 0.1 and 8 w/w%, with respect to the total weight of the suspoemulsion, of a polyanionic block copolymer surfactant comprising a hydrophobic moiety and a hydrophilic moiety, wherein at least 60 w/w% of the hydrophilic moiety comprises charged monomers, wherein said charged monomers are 2-acrylamido-2-methylpropane sulphonate, and wherein the weight percentage of the charged monomers is at least 35 w/w% with respect to the total weight of the polyanionic block copolymer surfactant.

An exemplary suspoemulsion according to the invention comprises
(i) a continuous liquid aqueous phase;
(ii) a liquid organic phase emulsified in the continuous aqueous phase, the liquid organic phase comprising
   - a water-insoluble organic solvent in a concentration between 1 w/w% and 20 w/w%, with respect to the total weight of the suspoemulsion, wherein said organic solvent is selected from the group of unepoxidized and epoxidized vegetable or mineral oils having 8 to 24 carbon atoms, preferably 12 to 22 carbon atoms; and
   - between 10 w/w% and 60 w/w%, with respect to the total weight of the suspoemulsion, of a First Active Ingredient that is solubilized in the organic phase, wherein said First Active Ingredient is selected from the group consisting of amide herbicides, anilide herbicides, benzoic acid herbicides, chloroacetanilide herbicides, cyclohexene oxime herbicides, dinitroaniline herbicides, nitrile herbicides, phenoxyacetic herbicides, phenoxybutyric herbicides, phenoxypropionic herbicides, aryloxyphenoxypropionic herbicides, pyridine herbicides, triazole herbicides and mixtures thereof;
(iii) between 1 w/w% and 10 w/w%, with respect to the total weight of the suspoemulsion, of a Second Active Ingredient that is solid and is suspended in the continuous aqueous phase, and is at least 0.1 w/w% soluble, for example, between 0.2 w/w% and 4 w/w% soluble in the liquid organic phase, for example, in the First Active Ingredient;
(iv) a polymeric surfactant in a concentration of between more than 0.5 w/w% and 5 w/w%, with respect to the total weight of the suspoemulsion, wherein the polymeric surfactant comprises a backbone of (meth)acrylate grafted with polyalkyloxide chains; and
(v) between 0.1 and 8 w/w%, with respect to the total weight of the suspoemulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant.

An exemplary suspoemulsion according to the invention comprises
(i) a continuous liquid aqueous phase;
(ii) a liquid organic phase emulsified in the continuous aqueous phase, the liquid organic phase comprising
   - a water-insoluble organic solvent in a concentration between 1 w/w% and 20 w/w%, with respect to the total weight of the suspoemulsion, wherein said organic solvent is selected from the group of unepoxidized and epoxidized vegetable oils, such as rapeseed oil, almond oil, jojoba oil, apricot kernal oil, avocado oil, babassu oil, borage oil, brazil nut oil, carrot root extract, ceresin oil, dog rose hips oil, emu oil, evening primrose oil, grape seed oil, hemp seed oil, kukui nut oil, macadamia nut oil, mango seed oil, olive oil, pine oil, peanut oil NF, rice bran oil, safflower oil, sesame oil, soybean oil, sunflower seed oil, sweet almond oil, wheat germ oil and mixtures and esters thereof; and
   - between 10 w/w% and 60 w/w%, with respect to the total weight of the suspoemulsion, of a First Active Ingredient that is solubilized in the organic phase, wherein said First Active Ingredient is selected from the group consisting of atrazine, bromoxynil, desmedipham, diflufenican, dimethenamid-P, diuron, fomesafen, ioxynil, isoproturon, isoxaben, linuron, S-metolachlor, oryzalin, oxyfluorfen, phenmedipham, prometryn, propyzamide, penoxsulam, pyroxsulam, quinclorac, simazine, terbuthylazine, terbutryn, tralkoxydim, flumioxazin, flumetsulam, metosulam, diclosulam and cloransulam-methyl and mixtures thereof, more preferably, selected from the group consisting of dimethenamid-P, S-metolachlor and mixtures thereof;
(iii) between 1 w/w% and 10 w/w%, with respect to the total weight of the suspoemulsion, of a Second Active Ingredient that is solid and is suspended in the continuous aqueous phase, and is at least 0.1 w/w% soluble, for example, between 0.2 w/w% and 4 w/w% soluble in the liquid organic phase, for example, in the First Active Ingredient, and wherein the Second Active Ingredient is selected from the group consisting of mesotrione, thiencarbazone and mixtures thereof;
(iv) a polymeric surfactant in a concentration of between more than 0.5 w/w% and 5 w/w%, with respect to the total weight of the suspoemulsion, wherein the polymeric surfactant comprises a backbone of (meth)acrylate grafted with polyalkyloxide chains; and
(v) between 0.1 and 5 w/w%, with respect to the total weight of the suspoemulsion, of a polyanionic block copolymer surfactant comprising a hydrophobic moiety and a hydrophilic moiety, wherein at least 80 w/w% of the hydrophilic moiety comprises charged monomers and wherein the weight percentage of the charged monomers is at least 35 w/w% with respect to the total weight of the polyanionic block copolymer surfactant.

An exemplary suspoemulsion according to the invention comprises
(i) a continuous liquid aqueous phase;
(ii) a liquid organic phase emulsified in the continuous aqueous phase, the liquid organic phase comprising
   - a water-insoluble organic solvent in a concentration between 1 w/w% and 20 w/w%, with respect to the total weight of the suspoemulsion, wherein said organic solvent is an unepoxidized and epoxidized vegetable oil selected from the group of rapeseed oil, soybean oil, sunflower seed oil, and mixtures and esters thereof; and
   - between 10 w/w% and 60 w/w%, with respect to the total weight of the suspoemulsion, of a First Active Ingredient that is solubilized in the organic phase, wherein said First Active Ingredient is selected from the group consisting of atrazine, bromoxynil, desmedipham, diflufenican, dimethenamid-P, diuron, fomesafen, ioxynil, isoproturon, isoxaben, linuron, S-metolachlor, oryzalin, oxyfluorfen, phenmedipham, prometryn, propyzamide, penoxsulam, pyroxsulam, quinclorac, simazine, terbuthylazine, terbutryn, tralkoxydim, flumioxazin, flumetsulam, metosulam, diclosulam and cloransulam-methyl and mixtures thereof, more preferably, selected from the group consisting of dimethenamid-P and S-metolachlor;
(iii) between 1 w/w% and 10 w/w%, with respect to the total weight of the suspoemulsion, of a Second Active Ingredient that is solid and is suspended in the continuous aqueous phase, and is at least 0.1 w/w% soluble, for example, between 0.2 w/w% and 4 w/w% soluble in the liquid organic phase, for example, in the First Active Ingredient, and wherein the Second Active Ingredient is selected from the group consisting of mesotrione, thiencarbazone and mixtures thereof;
(iv) a polymeric surfactant in a concentration of between more than 0.5 w/w% and 5 w/w%, with respect to the total weight of the suspoemulsion, wherein the polymeric surfactant comprises a backbone of (meth)acrylate grafted with polyalkyloxide chains; and
(v) between 0.1 and 5 w/w%, with respect to the total weight of the suspoemulsion, of a polyanionic block copolymer surfactant comprising a hydrophobic moiety and a hydrophilic moiety, wherein at least 70 w/w% of the hydrophilic moiety comprises charged monomers comprising a sulfonate and wherein the weight percentage of the charged monomers is at least 35 w/w% with respect to the total weight of the polyanionic block copolymer surfactant, and wherein the molar ratio of the hydrophobic moiety to the hydrophilic moiety is comprised between 1:2 and 1:4.

### Methods and Applications

The present invention provides a method for controlling undesired plants, pests or diseases comprising contacting an effective amount of the suspoemulsion of the invention with the locus of said undesired plants, pests or diseases.

The methods of the present invention refer to any undesired plant, pest or disease, for which the herbicide, insecticide or fungicide has known activity. In the same way the methods of the present invention refer to any crop for which the herbicide, insecticide or fungicide has known protecting activity. The methods of the present invention refer to any crop plants, including but not limited to monocotyledons such as sugar cane, cereals, rice, maize (corn); or dicotyledon crop such as beets (such as sugar beet or fodder beet); fruits (such as pomes, stone fruits, or soft fruits, for example apples, pears, plums, peaches, almonds, cherries, strawberries, raspberries, or blackberries); leguminous plants (such as beans, lentils, peas, or soybeans); oil plants (such as rape, mustard, poppy, olives, sunflowers, coconut, castor oil plants, cocoa beans, or groundnuts); cucumber plants (such as marrows, cucumbers or melons); fiber plants (such as cotton, flax, hemp, or jute); citrus fruits (such as oranges, lemons, grapefruit, or mandarins); vegetables (such as spinach, lettuce, cabbages, carrots, tomatoes, potatoes, cucurbits, or paprika); lauraceae (such as avocados, cinnamon, or camphor); tobacco; nuts; coffee; tea; vines; hops; durian; bananas; natural rubber plants; and ornamentals (such as flowers, shrubs, broadleaved trees, or evergreens, for example conifers).

The formulations of the invention are applied to the field in different amounts depending on the specific active ingredients used, the target crop and the unwanted plant, pest or disease to be controlled. In some embodiments, the active ingredients are each applied in an amount from about 1 g/ha to about 1000 g/ha, or from 100 g/ha to about 700 g/ha.

The suspoemulsions of the invention can be applied before planting, at the time of planting or after planting.

### Experiments

Particle size measurements of the SC and EW formulations were done by light scattering in a Marvern Mastersizer. For the SE formulations a 60x lenses was used and a representative sample of particles and droplets was manually measured with the Olympus Stream-basic software on Olympus BX53M microscope.

Atlox^{®} 4913 (Dispersant): Graft copolymer having a polymethylmethacrylate backbone grafted with polyethylene chains (~20 000 Da).

Nonionic emulsifier: Ethoxylated castor oil.
Non-ionic dispersant: Tristyrylphenol Ethoxylate
Additional anionic surfactant: sulfonate
Silicaid^{®} (antifoam): silicone antifoam emulsion
PolyAgro A: as described in Example 1 below

### Example 1: preparation of a polyanionic block copolymer surfactant used in the present emulsions

A sample of a polyanionic block copolymer surfactant as used in the present document was prepared following Example 1 of WO 2017/098325 A1 (pages 46 to 48): PolyAgro A.

PolyAgro A is a di-block copolymer, with a total weight of 17000 g/mol, composed of a hydrophobic moiety and a hydrophilic moiety. The hydrophilic moiety is made of sodium 2-Acryloylamino-2- methylpropane-I-sulfonate (AMPS) monomers, which represent 77 w/w% of the total weight of the copolymer. The other 23 w/w% of the copolymer corresponds to the hydrophobic moiety which is made of ethyl acrylate monomers. The total amount of monomers in the copolymer (degree of polymerization, DPn) is 85 monomers.

PolyAgro A was obtained following procedure described below:
Into a 2L double jacketed reactor equipped with mechanical agitator and reflux condenser was added 11.26 g of O-etyl-S-(1-methoxycarbonylethyl)anthate (CH₃CH(C0₂CH₃))S(C=S)OEt), 264.08g of Ethanol, and 356.32g of De-ionized water and 1400g of AMPS(Na) solution (50 percent active) and 1.52g of 4,4'-Azobis(4-cyanopentanoic acid). The reactor contents were heated to 70 degrees centigrade under agitation and nitrogen. The reaction mixture was aged at 70 degrees centigrade for a further hour whereupon it was cooled to ambient temperature and discharged. The measured solids content was 37.6 percent (115 degrees centigrade, 60 mins). GPC Mals: Mn=16300 Mw=2600 IP=1.6.

Into a 5L double jacketed reactor equipped with mechanical agitator and reflux condenser was added 2127g of the above solution and 330g of de-ionized water. The reactor contents were heated to 70 degrees centigrade under agitation and a nitrogen stream. Once 70 degrees centigrade was reached, 106.67g of ethyl acrylate (EA) were added over 2h and 37.37g of a 10 w/w% solution of 4,4'-Azobis(4-cyanopentanoic acid) was concomitantly added over 2.5h. After the addition of the initiator solution was finished, the reaction solution was further aged for one hour. Thereafter a shot of 44.85g of 10 w/w% solution of 4,4'-Azobis(4-cyanopentanoic acid) was added and the mixture aged at 70 degrees centigrade for a further hour whereupon it was cooled to ambient temperature and discharged. The measured solids content was 40.0 percent (115 degrees centigrade, 60 mins). Ethanol was removed from the polymer solution using a rotary evaporator. Water was added to achieve a polymer solution with a final solids content of 40.4 percent.

2600g of polymer solution was placed in-a 5L double jacketed reactor equipped with mechanical agitator and reflux condenser. The pH of the solution was increased to 8,5 using a 50 percent solution of NaOH. The mixture was heated to 70 degrees centigrade with stirring whereupon 48.4g of a 30 w/w% solution of hydrogen peroxide was added over 1 hour. Once additions were finished, the solution was aged for a further 3h whereupon it was cooled and discharged.

The residuals monomers were measure by HPLC and GC (AMPS = 22ppm, EA = 2ppm). The measured solids content was 37.5 percent. The polymer is used in the formulations according to the below examples from a ready aqua polymer solution at concentration of about 30 percent w/w.

### Example 2: Preparation of SC and EW formulations according to the invention

For obtaining the EW formulation, an organic phase premix containing Dimethenamid-P and rapeseed oil was prepared. A water phase premix was prepared containing the polyanionic block polymeric surfactant (Polyagro A prepared according to example 1) and a non-ionic surfactant. Organic and water phases were stirred together using standard overhead mixer, and then were submitted to high-shear in IKA homogenizer. Then Xanthan gum, and water were added to adjust the final viscosity.

For obtaining the SC, a premix containing a polymeric surfactant, a non-ionic surfactant, the additional anionic surfactant and the propylene glycol was prepared. Mesotrione was added and stirred using standard overhead mixer and milled in a vertical or horizontal bead-mill until particle size was below 6 microns. pH was adjusted to below 4 (to accommodate Mesotrione stability), and a 20 w/w% PVA solution was added using a standard overhead mixer. Xanthan gum and water were added to adjust the final viscosity.

For the SE, the EW was stirred using standard overhead mixer and the appropriate amount of SC was added in a thin stream into it. Stirring was continued for additional 10 min.

Following the above general procedure formulations SC1, SC2, SC3, EW1 and EW2 were prepared. Amounts of each of the components are summarized in Table 1 (amounts are given in weight percentage with respect to the total weight of the corresponding SC or EW formulation):

**Table 1**

| | SC1 | SC2 | SC3 | EW1 | EW2 |
|---|---|---|---|---|---|
| Mesotrione (Second Active Ingredient) | 42 | 42 | 42 | | |
| Atlox^{®} 4913 (dispersant) | >3.00 | | 6.0 | | |
| Dimethenamid-P (First Active Ingredient) | | | | 55 | 55.0 |
| Polyagro A | | 2.6 | | 2.6 | 2.6 |
| Non-ionic emulsifier | | 2.6 | | 2.6 | 2.6 |
| Non-ionic dispersant | 1.3 | | 1.3 | | |
| Aadditional anionic surfactant | 0.5 | | | | |
| Porpylene glycol | 4.5 | 4.5 | | 3.0 | |
| Xanthan Gum (2.7%) (thickener) | 6.8 | 6.8 | 6.3 | 3 | 3 |
| Silicaid^{®} (antifoam) | >0.3 | 0.2 | | 0.1 | 0.1 |
| Rapeseed oil | | | | | 11.0 |
| PVA | | | 1.5 | | |
| Water | up to 100% | | | | |

### Example 3: Preparation of suspoemulsions

Following the above process formulations SE1 (comparative), SE2 (comparative), SE3 (comparative) and SE4 were prepared as per Table 2. In all cases the proportion SC:EW was 1:5 and the amount of each component is given in w/w% with respect to the total weight of the SE formulation.

**Table 2**

| | SE1 (comparative) | SE2 (comparative) | SE3 (comparative) | SE4 |
|---|---|---|---|---|
| | SC1 + EW1 | SC2 + EW1 | SC1 + EW2 | SC3 + EW2 |
| Mesotrione | 7 | 7 | 7 | 7 |
| Atlox 4913 | >0.50 | | >0.50 | 1.00 |
| Dimethenamid-P | 45.8 | 45.8 | 45.8 | 45.8 |
| PolyAgro A | 2.2 | 2.6 | 2.2 | 2.2 |
| non-ionic emulsifier | 2.2 | 2.6 | 2.2 | 2.2 |
| Non-ionic dispersant | 0.2 | | 0.2 | 0.2 |
| Additional anionic surfactant | 0.08 | | 0.08 | |
| Propylene glycol | 3.25 | 3.25 | 0.75 | |
| Xanthan Gum | 3.6 | 3.6 | 3.6 | 3.5 |
| Silicaid | 0.13 | 0.11 | 0.14 | 0.08 |
| Rapeseed oil | | | 9.2 | 9.2 |
| Polyvinyl alcohol | | | | 0.25 |
| Water | 35 | 35 | 28.3 | 28.6 |

### Example 4: Stability test of suspoemulsions

SE1 appeared homogeneous to the naked eye but showed large aggregates under the microscope (hundreds of microns in size). Dilution in water to prepare tank mixes immediately resulted in the precipitation of mesotrione.

The inventors hypothesized that the negative results observed in SE1 could be due to the incompatibility of the surfactants present in the SC and EW formulations, a common problem in SE formulations. Therefore, an SC formulation (SC2) having similar surfactants to those of EW1 was prepared with the addition of Polyagro A. This suspoemulsion was labeled SE2. However, SE2 still presented large aggregates under the microscope and precipitation of mesotrione upon dilution with water.

Another common solution to formulation incompatibility that arises from Active Ingredient solubility is increasing the ionic strength of the water phases by the addition of salts. The inventors tried ammonium carbonate and potassium carbonate (compositions not listed in tables 1 and 2). The addition of ammonium carbonate resulted in the decomposition of mesotrione, probably due to an increase in the pH. The use of potassium carbonate provided unstable EW compositions.

Reductions of the concentration of the active ingredients resulted in formulations that were initially stable, but that developed large aggregates after a few days.

The inventors then added rapeseed oil to the oil-in-water emulsion and changed the surfactants, including PolyAgro A. The formulation was labeled as EW2. The mixture of EW2 and SC1 improved the stability and provided a more stable suspoemulsion SE3 which however displayed small aggregates under the microscope, and a little precipitation of mesotrione after dilution in water.

Then the inventors decided to increase the concentration of the polymeric surfactant used in SC1 from less than 3.00 w/w%, to 6 w/w%, which is unusually high and *a priori* commercially not a good option from the economic point of view. The formulation was labeled as SC3. The SC3 formulation was mixed with the EW2 (containing rapeseed oil and PolyAgro A) to produce SE4. The stability of the formulation was dramatically improved, with no observable aggregates, and no precipitation of mesotrione upon dilution. After accelerated stability tests (2 weeks at 54°C) no aggregates were observed under the microscope. Further stability tests were performed. These tests included 8 weeks at 40°C, simulating 2-year storage, 1 week at -10°C, which provides information about cold-storage stability, and 1 week at freeze-thaw cycles (7 cycles -5°-25°) provided identical good results. Viscosity was measured in a Brookfield DV2T density meter, using S63 spindle at 12RPM. pH was measured in the neat formulation using Jenway pH meter. Dispersion stability was measured according to CIPAC MT 180 test. Density was measured using DMA 501 Anton Paar density meter.

### Example 5: Thiencarbazone, cyprosulfamide and dimethenamid-P SE formulation

Following the procedures of examples 2 and 3 a formulation was prepared having the components listed in Table 3.

**Table 3**

| Component | w/w% |
|---|---|
| Thiencarbazone (94.5%) | 3 |
| Cyprosulfamide (97.2%) | 4.4 |
| Dimethenamid-P (99.3%) | 41.4 |
| Alcohol ethoxylate/propoxylate | 0.08 |
| PolyAgro A | 3.08 |
| Atlox 4913 | 0.49 |
| Antifoam Silicone emulsion | 0.02 |
| non-ionic emulsifier | 2.60 |
| Rapeseed oil | 10.92 |
| Xanthan gum | 0.12 |
| water | 33.97 |

The formulation displayed no aggregates and was physically stable for two weeks at 54°C.

### Example 6: Further dimethenamid / mesotrione formulations SE formulation

Following the procedures of examples 2 and 3 two further formulations were prepared having the components listed in Table 4.

**Table 4**

| Component | w/w% | |
|---|---|---|
| Mesotrione | 9.9 | 9.01 |
| Dimethenamid-P | 45.45 | 45.05 |
| non-ionic dispersant | 0.27 | 0.25 |
| PolyAgro A | 2.13 | 3.38 |
| Atlox 4913 | 1.25 | 1.17 |
| Antifoam Silicone emulsion | 0.1 | - |
| non-ionic emulsifier | 2.13 | 1.45 |
| alcohol ethoxylate/propoxylate | - | 2.41 |
| Rapeseed oil | 8.73 | 8.85 |
| Xanthan gum | 0.11 | 0.088 |
| Polyvinyl alcohol | 0.31 | 0.3 |
| Biocide | 0.055 | 0.044 |
| water | Up to 100% | Up to 100% |

The formulations displayed no aggregates and was physically stable for two weeks at 54°C.

## Claims

1. A suspoemulsion composition comprising
(i) a continuous liquid aqueous phase;
(ii) a liquid organic phase emulsified in the continuous aqueous phase, the liquid organic phase comprising
- a water-insoluble organic solvent in a concentration between 1 w/w% and 50 w/w%, with respect to the total weight of the suspoemulsion; and
- a First Active Ingredient that is solubilized in the organic phase;
(iii) a Second Active Ingredient that is solid and is suspended in the continuous aqueous phase, and is at least partially soluble in the organic phase;
(iv) a polymeric surfactant in a concentration of at least 0.5 w/w%, with respect to the total weight of the suspoemulsion; and
(v) between 0.1 and 15 w/w%, with respect to the total weight of the suspoemulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant.

2. The suspoemulsion according to claim 1, wherein the water-insoluble organic solvent is a vegetable or mineral oil having 8 to 24 carbon atoms, preferably 12 to 22 carbon atoms.

3. The suspoemulsion according to claim 2, wherein the vegetable oil is an unepoxidized or epoxidized vegetable oil 8 to 24 carbon atoms, preferably 12 to 22 carbon atoms is selected from the group consisting of rapeseed oil, almond oil, jojoba oil, apricot kernal oil, avocado oil, babassu oil, borage oil, brazil nut oil, carrot root extract, ceresin oil, dog rose hips oil, emu oil, evening primrose oil, grape seed oil, hemp seed oil, kukui nut oil, macadamia nut oil, mango seed oil, olive oil, pine oil, peanut oil NF, rice bran oil, safflower oil, sesame oil, soybean oil, sunflower seed oil, sweet almond oil, wheat germ oil and mixtures and esters thereof.

4. The suspoemulsion according to any of the previous claims, wherein the polymeric surfactant comprises a backbone of alkyl(meth)acrylate grafted with polyalkyloxide chains.

5. The suspoemulsion according to any of the previous claims, wherein the concentration of the polymeric surfactant is comprised between 0.5 w/w% and 2 w/w%, with respect to the total weight of the suspoemulsion.

6. The suspoemulsion according to any of the previous claims, wherein the First Active Ingredient is an herbicide selected from the group consisting of amide herbicides such as dimethenamid and dimethenamid-P; anilide herbicides such as propanil; benzoic acid herbicides such as dicamba; chloroacetanilide herbicides such as acetochlor, alachlor, butachlor, metolachlor and S-metolachlor; cyclohexene oxime herbicides such as sethoxydim; dinitroaniline herbicides such as benfluralin, ethalfluralin, pendimethalin, and trifluralin; Isoxazolidinone herbicides such as bixlozone; nitrile herbicides such as bromoxynil octanoate; oxyacetamides such as isoxaflutol; phenoxyacetic herbicides such as 4-CPA, 2,4-D, 3,4-DA, MCPA, and MCPA-thioethyl; phenoxybutyric herbicides such as 4-CPB, 2,4-DB, 3,4-DB, and MCPB; phenoxypropionic herbicides such as cloprop, 4-CPP, dichlorprop, dichlorprop-P, 3,4-DP, fenoprop, mecoprop and mecoprop-P; aryloxyphenoxypropionic herbicides such as cyhalofop, fluazifop, fluazifop-P, haloxyfop, haloxyfop-R; pyridine herbicides such as aminopyralid, clopyralid, picloram, and triclopyr; and triazole herbicides such as carfentrazone ethyl, and mixtures thereof.

7. The suspoemulsion according to any of the previous claims, wherein the First Active Ingredient is an herbicide selected from the group consisting dimethenamid-P, S-metolachlor and mixtures thereof.

8. The suspoemulsion according to any of the previous claims, wherein the Second Active Ingredient is a herbicide selected from the group consisting of mesotrione, thiencarbazone and mixtures thereof.

9. The suspoemulsion according to any of the previous claims, wherein said charged monomers comprise an anionic sulphate group.

10. A process for the preparation of the suspoemulsion defined in any of claims 1 to 9 that comprises mixing an oil-in-water emulsion with an aqueous suspension in a proportion comprised between 10:1 to 1:10, wherein
the oil-in-water emulsion comprises a continuous aqueous phase and a liquid organic phase emulsified in the continuous aqueous phase, the liquid organic phase comprising
- a water-insoluble organic solvent in a concentration between 1 w/w% and 60 w/w%, with respect to the total weight of the emulsion; and
- a First Active Ingredient that is solubilized in the organic phase;
wherein
the aqueous suspension comprises a Second Active Ingredient which is solid, at least partially soluble in the liquid organic phase and is suspended in a continuous aqueous phase; and a polymeric surfactant in a concentration of at least 3 w/w%, with respect to the total weight of the aqueous suspension;
and wherein
the oil-in-water emulsion, the aqueous suspension or both comprise a total of between 0.1 and 15 w/w%, with respect to the total weight of the suspoemulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant.

11. Use for preparing a suspoemulsion as defined in any of claims 1 to 9 of an oil-in-water emulsion comprising a liquid organic phase emulsified in a continuous aqueous phase, the liquid organic phase comprising
- a water-insoluble organic solvent in a concentration between 1 w/w% and 60 w/w%, with respect to the total weight of the oil-in-water emulsion;
- a First Active Ingredient that is solubilized in the organic phase; and
- between 0.1 and 15 w/w%, with respect to the total weight of the oil-in-water emulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant.

12. Use for preparing a suspoemulsion as defined in any of claims 1 to 9 of an aqueous suspension comprising a Second Active Ingredient which is at least partially soluble in a first organic phase, and is suspended in a continuous aqueous phase; a polymeric surfactant in a concentration of at least 3 w/w%, with respect to the total weight of the aqueous suspension; and between 0.1 and 15 w/w%, with respect to the total weight of the aqueous suspension, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant.

13. An oil-in-water emulsion comprising a liquid organic phase emulsified in a continuous aqueous phase, the liquid organic phase comprising
- a water-insoluble organic solvent in a concentration between 1 w/w% and 60 w/w%, with respect to the total weight of the oil-in-water emulsion;
- a First Active Ingredient that is solubilized in the organic phase; and
- between 0.1 and 15 w/w%, with respect to the total weight of the oil-in-water emulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant.

14. An aqueous suspension comprising a Second Active Ingredient which is at least partially soluble in a first organic phase, it is solid and is suspended in a continuous aqueous phase; a polymeric surfactant in a concentration of at least 3 w/w%, with respect to the total weight of the aqueous suspension; and between 0.1 and 15 w/w%, with respect to the total weight of the aqueous suspension, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant.

15. A method for the control of undesired plants, pests or diseases comprising contacting an effective amount of the suspoemulsion as defined in any of claims 1 to 9 with the locus of said undesired plants, pests or diseases.
